# EUROPÄISCHE PATENTSCHRIFT

(11) **EP 2 037 545 B1**
(45) Veröffentlichungstag und Bekanntmachung des Hinweises auf die Patenterteilung: **08.06.2016**
(21) Anmeldenummer: 08164358.7
(22) Anmeldetag: 15.09.2008
(51) Int. Cl.: H01R 13/64, H01R 13/506, H01R 13/703, B60D 1/06, B60D 1/64

(54) **Steckdose für eine mehrpolige Steckvorrichtung**
Connector for a multi-terminal connector device
Prise pour un dispositif de raccordement multipolaire

(30) Priorität: 17.09.2007 DE 202007013022 U
(43) Veröffentlichungstag der Anmeldung: 18.03.2009
(73) Patentinhaber: Plastimat GmbH, 33378 Rheda-Wiedenbrück (DE)
(72) Erfinder: Jürgens, Georg, 33378 Rheda-Wiedenbrück (DE)
(74) Vertreter: Rupp, Christian

(56) Entgegenhaltungen:
- EP-A1- 0 887 895
- EP-A1- 1 267 453
- DE-A1- 1 962 198
- DE-C1- 19 736 629
- DE-U1- 8 811 182
- DE-U1- 9 207 523
- DE-U1- 29 518 259
- DE-U1- 29 800 542
- DE-U1-202005 018 574
- US-A- 4 711 510

## Beschreibung

Die Erfindung betrifft eine Steckdose für eine mehrpolige Steckvorrichtung, für die elektrische Verbindung zwischen einem Kraftfahrzeug und einem Kraftfahrzeuganhänger, wie er im Oberbegriff des Schutzanspruches 1 angegeben ist.

Moderne Anhängerkupplungen sind schwenkbar an einem Kraftfahrzeug angeordnet, damit dann, wenn kein Anhänger angehängt ist, die Kupplung in einen unter dem Fahrzeug befindlichen Außerbetriebszustand geschwenkt werden kann, in dem sie nicht sichtbar ist; dadurch wird der optische Eindruck des Fahrzeugs verbessert. Der elektrische Anschluss des Anhängers an das Kraftfahrzeug erfolgt über eine Steckdose. Die bestehenden Steckdosen nach DIN 11446 und auch die nach der früheren Norm DIN 1724 haben eine Schraubverbindung mit einem Halteblech; eine solche Dose wird üblicherweise an der Karosserie neben der Anhängerkupplung angebracht. Dabei befindet sich zwischen dem Halteblech und der Steckdose eine Unterlage, die die Steckdose gegen Spritzwasser abdichten soll. Es ist wünschenswert, die Steckdose in der schwenkbaren Anhängerkupplung unterzubringen, damit auch die Steckdose im Außerbetriebszustand der Kupplung nicht sichtbar ist und sich eine geschlossene, alle mechanischen und elektrischen Elemente umfassende Kupplungseinheit ergibt. Die herkömmlichen Steckdosen mit Schraubverbindung und Halteplatte sind hierfür nicht geeignet, da sie auf den Kupplungshaken aufgesetzt werden müssten und damit sehr breit machen. Die Bestrebungen gehen daher dahin, die Steckdose im Kupplungshaken selbst unterzubringen. Dies führt zu der Forderung, die Abmessungen der Steckdose besonders klein zu halten. Weiterhin muss sie besonders gegen Spritzwasser geschützt sein, da sie sich im Außerbetriebszustand unter dem Fahrzeug und damit näher an der Fahrbahn befindet und daher in viel höherem Maß dem Spritzwasser ausgesetzt ist als oberhalb der hinteren Stoßstange des Fahrzeugs.

Bei Steckdosen für Anhängerkupplungen besteht das Bedürfnis, dem Zugfahrzeug durch ein Signal mitzuteilen, dass der Stecker eines Anhängers in die Steckdose am Zugfahrzeug eingesteckt ist. Dieses Signal kann beispielsweise dazu verwendet werden, dass bei einem Anhängerbetrieb die Nebelschlussleuchten des Zugfahrzeugs selbsttätig abgeschaltet werden, weil dann die Nebelschlussleuchten des Anhängers über die Anhänger-Steckverbindung versorgt werden. Eine solche Steckdose ist beispielsweise aus dem deutschen Gebrauchsmuster G 92 07 523 bekannt. Die dort dargestellte Steckdose besitzt ein Dosengehäuse und einen mit Abstand von dem Dosenmantel in dem Dosengehäuse aufgenommenen Kontakteinsatz für die elektrischen Steckkontakte. In dem Zwischenraum zwischen dem Kontaktträger und dem Dosenmantel ist ein Mikroschalter angeordnet. Der Mikroschalter besitzt einen Auslösestift, der beim Einstecken des Steckers betätigt wird und dadurch ein Schaltsignal liefert.

Bei dieser Dose ist nachteilig, dass der Durchmesser der Dose relativ groß ist, weil der Zwischenraum zwischen dem Kontaktträgereinsatz und dem Dosengehäuse infolge der Position des Mikroschalters eine bestimmte Größe erfordert und nicht reduziert werden kann. Bei dieser Dose ist weiter nachteilig, dass sie in herkömmlicher Weise auf einer Halteplatte verschraubt und an der Halteplatte mit einer Gummidichtung abgedichtet wird. Da der Anpressdruck der Schrauben infolge Alterungserscheinungen des Gummimaterials nachlässt, können im Laufe der Zeit Undichtigkeiten auftreten.

Ein ähnliche Dose mit einem Gehäuse, einem Kontakteinsatz und einem Schalter ist in der DE 295 18 259 U1 offenbart. Der Kontakteinsatz weist ferner eine Aufnahmeplattform für den Schalter auf, von der rechtwinklig zwei Haltestifte zur Positionierung des Schalters abstehen. Der Kontakeinsatz besteht aus einem äußerem Halter und einem innerem Kontaktträger, dabei bilden der Kontaktträger und der Halter zusammen einen Aufnahmeraum für den Schalter, wobei der Kontaktträger besagte Haltestifte für den Schalter aufweist. Weiterhin ist ein Betätigungselement gezeigt, welches in entsprechende Ausnehmungen des Halters eingesetzt, den durch den Kontaktträger gehaltenen Schalter betätigt. Eine relativ komplizierte Anordnung mit großem Platzbedarf neben dem Kontakteinsatz ist somit die Folge.

Aufgabe der Erfindung ist dementsprechend, eine Dose anzugeben, deren Durchmesser gegenüber den bekannten Dosen verringert ist, so dass sie sich für die Unterbringung im Kupplungshaken eignet. Sie sollte aber auch für die herkömmliche Montage an zwei Anschraubdomen am Kupplungshaken eingerichtet sein. Bei dieser Unterbringung entsteht die Forderung, dass sie in besonderen Maße gegen Spritzwasser geschützt ist. Dabei ist es weiter ein Ziel der Erfindung, eine Dose mit einem seitlichen Kabelabgang bereit zu stellen, bei dem also der abgeführte Kabelstrang nicht parallel, sondern senkrecht zur Achse der Dose ausgerichtet ist. Ein solcher Kabelabgang ist wünschenswert, wenn die Dose in einem schwenkbaren Anhängerhaken untergebracht wird, weil die Achse der Dose dann quer zur Fahrtrichtung liegt, das Kabel aber in Fahrtrichtung abgeführt werden muss. Dabei muss die Ausgestaltung der Dose eine Variationsmöglichkeit für den Winkel bilden, unter dem der seitliche Kabelabgang abgeführt wird, damit die Dose für Anhängerkupplungen unterschiedlicher Hersteller geeignet ist.

Die Hauptaufgabe, den Dosendurchmesser zu verringern, wird mit einer Dose nach dem Schutzanspruch 1 gelöst. Die weiteren Vorteile eines seitlichen Kabelabgangs und nach einer Variationsmöglichkeit bezüglich des Winkels der seitlichen Kabelabführung werden mit den Merkmalen des Unteranspruches 7 gelöst.

Bei den herkömmlichen Dosen besitzt der Kontakteinsatz eine Führungsnut, die beim Einstecken des Kontakteinsatzes in die Dose über einen entsprechenden Nocken des Dosengehäuses hinweg fährt und dadurch sicherstellt, dass der Kontakteinsatz lagerichtig eingesteckt wird und die auch eine Kodierungsfunktion haben kann. Die Erfindung macht sich den Umstand zu nutze, dass im Bereich dieser Führungsnut noch ausreichend Raum zur Verfügung steht, um einen Schalter, insbesondere einen Mikroschalter, unterzubringen. Aufgrund der Unterbringung des Mikroschalters in dem Kontakteinsatz ergibt sich der weitere Vorteil, dass bei der Endmontage der Verkabelung der Mikroschalter gemeinsam mit dem Kontakteinsatz von hinten in die Dose eingesteckt werden kann; es ist also abweichend vom Stand der Technik nicht notwendig, in zwei Stufen zunächst den Mikroschalter und anschließend den Kontakteinsatz in die Dose einzuführen und zu befestigen. Zweckmäßigerweise besitzt die Dose eine oder mehrere Rastzungen, an denen der Kontakteinsatz beim Einführen in die Dose entlang gleitet, und die dann, wenn der Kontakteinsatz in der Dose seine Endstellung erreicht hat, an entsprechenden Rastnocken oder Rastkanten des Kontakteinsatzes angreifen und ihn in seiner Lage sichern.

Erfindungsgemäß ist der Mikroschalter am hinteren Ende der Führungsnut befestigt und kann entweder direkt durch die in dieser Nut laufenden Führungsnocken des Steckers betätigt werden, oder aber über einen sich vor dem Mikroschalter befindenden Zwischenring der mit einem Vorsprung in die Führungsnut des Kontakteinsatzes eingreift.

Für den seitlichen Kabelabgang besitzt die Dose der an der der Einstecköffnung abgewandten Seite eine Kappe, die eine seitliche Öffnung für die Abführung des Kabels besitzt. Die Dose und die Kappe besitzen einander zugeordnete Rastmittel, die drehsymmetrisch so angeordnet sind, dass die Kappe in verschiedenen Drehwinkeln zur Dose angeordnet und verrastet werden kann. Als Rastmittel können beispielsweise zueinander komplementär ausgebildete L-förmige Schenkel am Außenrand der Kappe bzw. der Dose angeordnet sein, die durch Drehen ineinandergeführt werden. Um ein Zurückdrehen zu verhindern, sind an den Enden des einen L-Schenkels kleine Rastvorsprünge und an den jeweils anderen L-Schenkeln entsprechende kleine Hinterschneidungen angeordnet, in die die Rastvorsprünge der jeweils anderen L-Schenkel eingreifen. In die Kappe ist eine hutartige Gummidichtung eingesetzt, die die Innenfläche der Kappe vollständig auskleidet und an der Grenzfläche zur Dose eine U-förmige periphere Ringnut besitzt. In diese Ringnut greift im zusammengesetzten Zustand das rohrartige Ende des Dosengehäuses ein, das mit der Dichtung eine Nut-Feder-Verbindung bildet. Diese Nut-Federverbindung sorgt für eine vollkommen zuverlässige und dauerhafte Abdichtung der Kappe an der Dose.

Im Folgenden wird die Erfindung anhand des in den Figuren dargestellten Ausführungsbeispiels beschrieben und näher erläutert.

Es zeigen
- FIGUR 1: eine Anhängerkupplung mit einer erfindungsgemäßen Steckdose;
- FIGUR 2: eine perspektivische Darstellung der erfindungsgemäßen Steckdose in geschlossener Form von oben;
- FIGUR 3: die Dose nach FIGUR 2 von unten;
- FIGUR 4: eine erste Ausführungsform eines Kontaktträgers mit Mikroschalter;
- FIGUR 5: die Ausführungsform nach FIGUR 4 mit einem Zwischenring;
- FIGUR 6: eine zweite Ausführungsform eines Kontakteinsatzes mit einem an der Einstecköffnung angeordneten Mikroschalter;
- FIGUR 7: eine Sicht auf die Rückseite des Dosengehäuses mit dem darin aufgenommenen Kontakteinsatz
- FIGUR 8: eine vergrößerte Darstellung der Rastverbindung zwischen dem Gehäuse und der Kappe;
- FIGUR 9: eine Innenansicht der Kappe;
- FIGUR 10: eine Sicht auf die Innenseite der Dichtung für die Kappe.
- FIGUR 11: die Innenseite der Kappe mit eingesetzter Dichtung

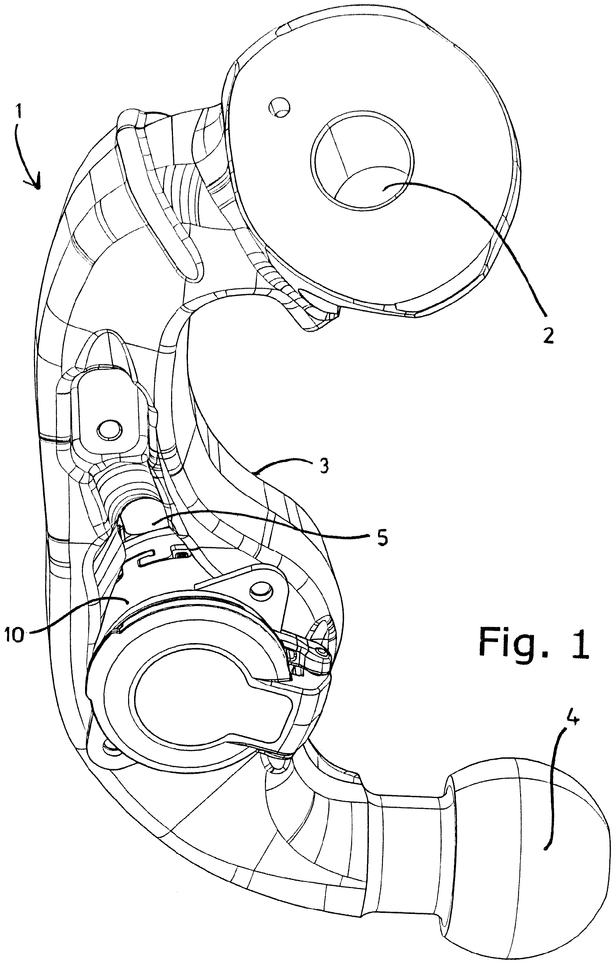

Die FIGUR 1 zeigt eine Anhängerkupplung, in die eine erfindungsgemäße Steckdose eingebaut ist. Die Anhängerkupplung (1) besitzt einen Gelenkfuß (2), von den ein Hals (3) ausgeht, der an seinem anderen Ende den Kupplungskopf (4) trägt. Der Hals (3) ist in seiner Mitte unter Bildung einer Aufweitung mit einer Öffnung (5) versehen, in die die Dose (10) eingesetzt ist.

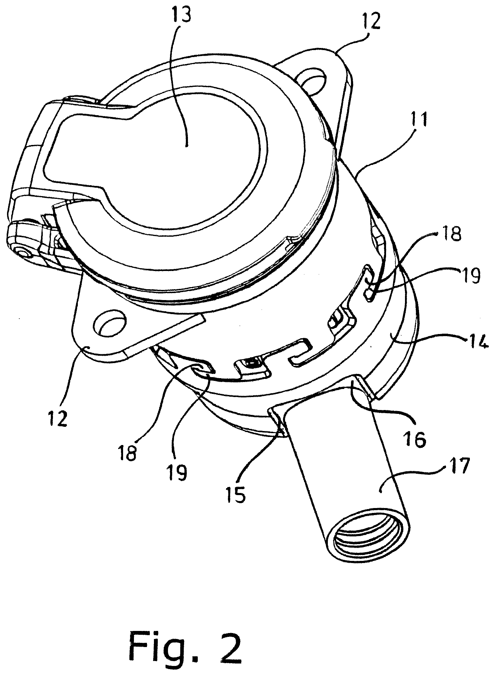

Die FIGUR 2 zeigt die erfindungsgemäße Dose in einer perspektivischen Ansicht schräg von oben. Das Dosengehäuse (11) besitzt an seinem oberen Ende zwei Anschlussflansche (12) für eine Schraubbefestigung an dem Kupplungshals. Die Dose ist oben mit einem Klappdeckel (13) verschließbar. Am unteren Ende befindet sich eine Kappe (14) mit einer seitlichen Öffnung (15), durch die sich eine Dichtung (16) mit der angeformten Kabeltülle (17) erstreckt. An der Kappe sind an ihrem Umfang in axialer Richtung abstehende L-förmige Rasthaken (18) angeordnet. Diese arbeiten mit komplementär ausgebildeten Rasthaken (19) zusammen, die an der Außenseite des Dosengehäuses angeformt sind. Die Rasthaken sind so angeordnet, dass sich insgesamt acht mögliche Stellungen der seitlichen Kabelaustrittsöffnung ergeben, die jeweils um einen Winkel von 45° gegeneinander verdreht sind. Ebenso lässt sich damit die Öffnungsrichtung des Dosendeckels in Bezug auf den Kupplungshaken einstellen.
Die Ausgestaltung der Dose ermöglicht es, sie wahlweise mit nach rechts oder auch mit nach links zeigenden Deckel am Kupplungshaken zu befestigen.

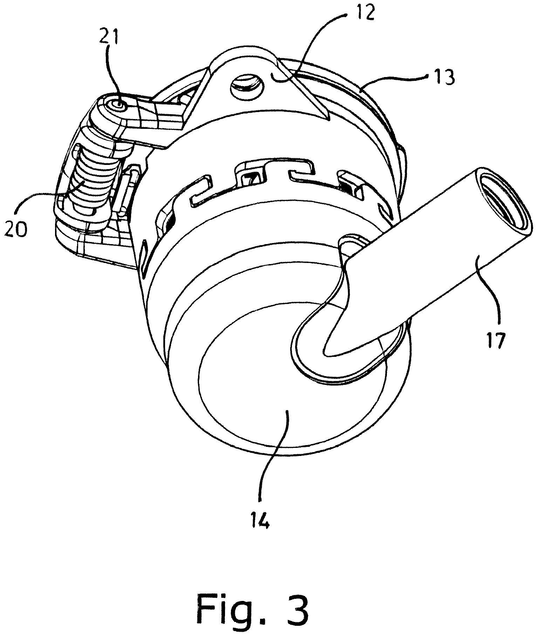

In der FIGUR 3 ist die erfindungsgemäße Dose in geschlossener Form von unten gezeigt. Die Schließfeder (20) für den Deckel (13) ist als Spiralfeder ausgebildet und um die Achse (21) des Deckels herumgelegt.

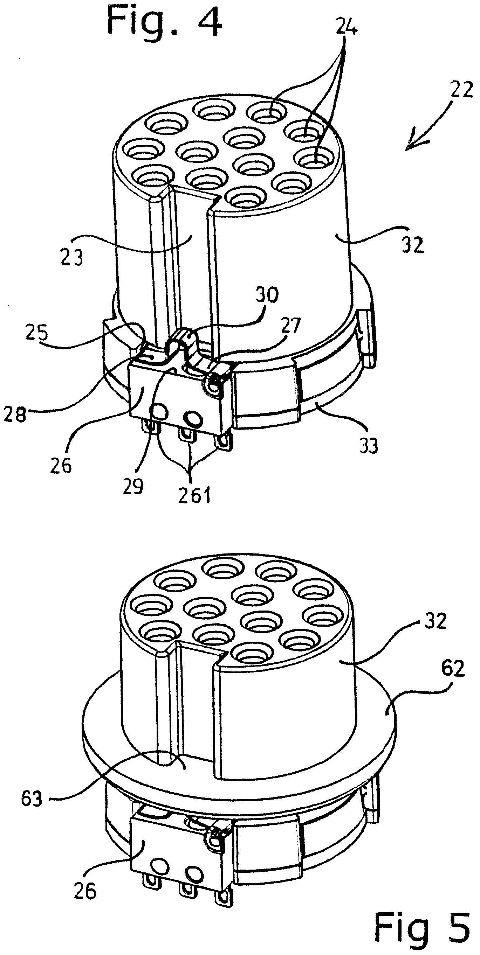

In der FIGUR 4 ist ein Kontakteinsatz für eine 13-polige Steckverbindung dargestellt. Er besitzt eine entsprechende Zahl von Bohrungen (24) für die Aufnahme der Kontaktstifte bzw. der Kontaktbuchsen. Der Kontakteinsatz (22) besitzt eine Führungsnut (23), die an ihrem innen liegenden, in Figur 4 unteren Ende zu einer Aussparung (25) aufgeweitet ist. In dieser Aussparung (25) ist der Mikroschalter (26) angeordnet. Der Mikroschalter wird mit einem Schwenkmechanismus betätigt, wobei der Schwenkhebel (27) als Blattfeder gekrümmt ist und sich mit seinem freien Ende (28) auf der Oberfläche (29) des Mikroschalters abstützt. Die Blattfeder besitzt eine sattelförmige, nach oben stehende Ausbuchtung (30), an die der Kontaktträger des Steckers angreift und den Schwenkhebel niederdrückt, wenn er in die Dose eingesteckt wird. Die Kontakte (261) des Mikroschalters sind vorzugsweise als Flachstecker ausgeführt.

FIGUR 5 zeigt eine alternative Ausführungsform zu dem Kontaktträger nach FIGUR 4. Oberhalb des Betätigungsarmes (27) des Mikroschalters befindet sich ein Zwischenring (62), der mit einem Nocken (63) in die Führungsnut (23) des Kontakteinsatzes eingreift. Mit einem solchen Zwischenring lässt sich eine Anpassung vornehmen, wenn die Einstecktiefe des zugeordneten Anhänger-Steckers nicht groß genug ist, um die glockenförmige Ausbuchtung (30) des Betätigungshebels (27) zu erreichen.

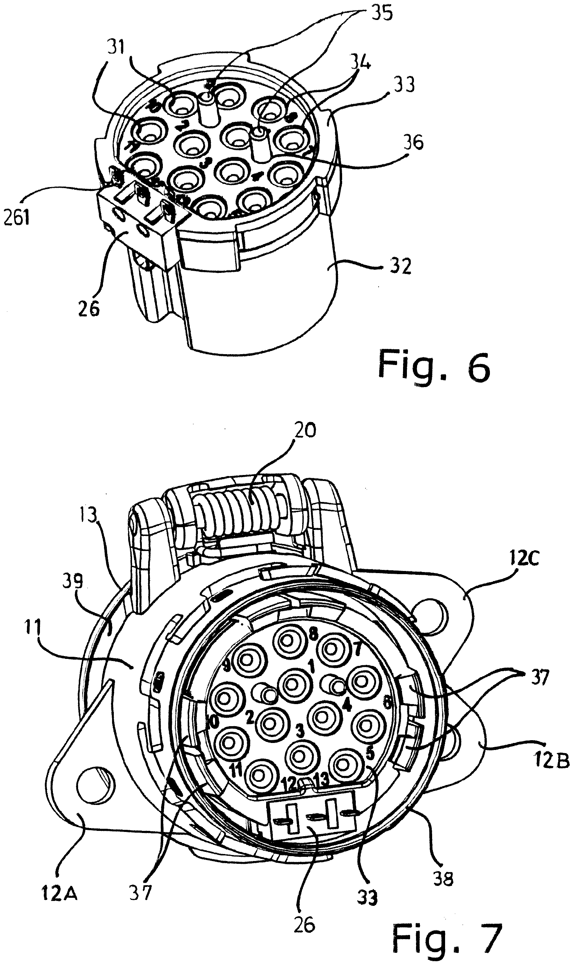

FIGUR 6 zeigt eine Sicht auf die der Einstecköffnung abgewandten Seite des Kontakteinsatzes (22). Er umfasst in herkömmlicher Weise, wie es beispielsweise in EP-A-0 147 956 oder EP-A-0 327 701 dargestellt ist, einen Kontaktaufsatz (32) mit Bohrungen (24) für die Kontaktstifte oder Kontaktbuchsen (31), und einen Kontakthalter (33), welcher Öffnungen für die Kontakte (31) und (in der Figur nicht sichtbare) Rastzungen besitzt, die in entsprechende Ringnuten der Kontaktbuchsen bzw. der Kontaktstifte eingreifen (in den Figuren nicht dargestellt). Diese Rastzungen werden, wenn der Kontakthalter in dem Kontaktaufsatz verrastet wird, in passgenauen Bohrungen des Kontaktaufsatzes seitlich abgestützt, sodass ein beim Einstecken auf die Kontaktbuchsen oder Kontaktstifte ausgeübter Druck nicht dazu führen kann, dass die Kontakte aus ihrem Sitz herausgedrückt werden. Der Kontaktaufsatz (32) besitzt zwei von der Einstecköffnung wegzeigende Stifte (35), die beim Zusammenbau in entsprechende Bohrungen (36) des Kontakthalters (33) eingeführt werden.

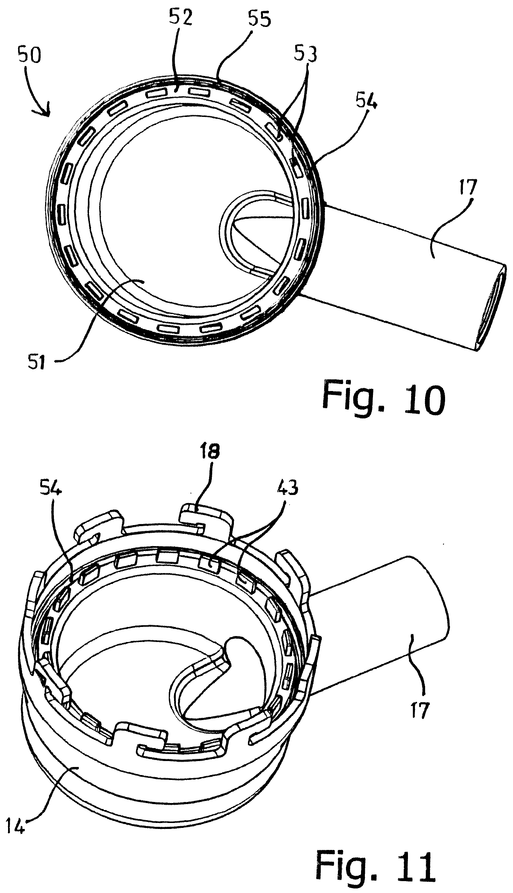

FIGUR 7 zeigt eine Sicht auf die Rückseite des Dosengehäuses, in das der Kontakteinsatz eingesetzt ist. Der Kontakteinsatz wird von Rastzungen (37) gehalten, die im Inneren des Dosengehäuses (11) einstückig mit ihm ausgeformt sind. Die Rastzungen greifen mit an ihrem Ende ausgeformten Haken am Rand des Kontakthalters (33) an. An dem Deckel-seitigen Ende besitzt das Dosengehäuse (11) einen nach außen stehende Wulst (39), der den Rand des Deckels (13) vor Spritzwasser schützt. Das rohrartige Ende (38) des Dosengehäuses (11) ist vorzugsweise konisch angespitzt, um das Einpassen in die Ringnut (54) der Dichtung (51) (siehe FIGUR 10) zu erleichtern. Das Dosengehäuse weist drei Anschlussflansche 12A, 12B und 12C auf, von denen die Flansche 12A und 12C spiegelsymmetrisch angeordnet sind.

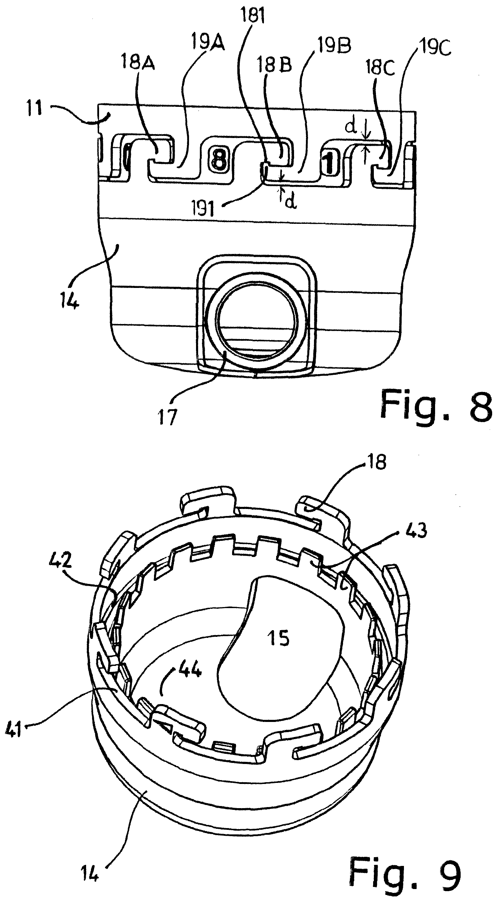

FIGUR 8 zeigt die Verrastung der Kappe am Dosengehäuse im Detail. Am Außenumfang der Kappe (11) sind in radialer Richtung L-förmige Rastzungen (18A, 18B, 18C) angeformt. Der in Umfangsrichtung zeigende Schenkel besitzt jeweils eine Hinterschneidung (181), in die ein Rastvorsprung (191) der komplementären Rastzungen (19A, 19B, 19C) des Gehäuses eingreift. Anhand der Figur ist ersichtlich, dass zwischen dem äußeren Ende der L-Schenkel und den entsprechenden Hinterschneidungen des jeweils anderen Teils ein kleiner Abstand d von beispielsweise 1 mm besteht, der in etwa gleich groß ist wie die Tiefe der Hinterschneidung (181). Um die Kappe (14) von dem Dosengehäuse (11) zu lösen werden beide gegeneinander gedrückt, sodass der Abstand d sich verringert und die Rastnocken (191) aus den Hinterschneidungen (181) ausrücken. Die Kappe kann dann gegen das Dosengehäuse verdreht und dadurch abgenommen werden. Das Zusammendrücken von Kappe und Dosengehäuse erfolgt gegen den Widerstand der zwischen ihnen angeordneten gummielastischen Dichtung, die dabei zusammengedrückt wird und daher einen Widerstand bietet. Die von der Dichtung ausgeübte elastische Kraft treibt in zusammengesetzten und eingerasteten Zustand Dosegehäuse und Kappe auseinander, sodass dadurch die Rastverbindung der Rastnocken (191) in den Hinterschneidung (181) gesichert werden.

Die FIGUR 9 zeigt eine Innenansicht der Kappe (14). Die Wand (41) der Kappe besitzt auf der Innenseite einen Absatz (42) für die Auflage der Gummidichtung. Auf der Innenseite des Absatzes stehen zahnartige Stege (43) in axialer Richtung vor, die zur Lagefixierung der Gummidichtung bestimmt sind und die durch entsprechende Schlitze (53) (FIGUR 9) der Gummidichtung hindurchtreten, wenn diese in die Kappe eingesetzt ist. Die Kappe besitzt eine seitliche Öffnung (15), die bis in die Stirnfläche (44) der Kappe fortgesetzt ist und dazu dient, die für die Kabeldurchführung bestimmte Tülle der Gummidichtung aufzunehmen.

Die FIGUR 10 zeigt die Dichtung (50). Sie besteht aus einem hutartigen Teil (51) mit einem krempenartigen Teil (52), welches an seiner Außenseite eine umlaufende Lippe (54) besitzt. In diesem krempenartigen Teil (52) sind Schlitze (53) angeordnet, die für die Aufnahme der Zähne (43) an der Kappe dienen. Aus dem hutartigen Teil (51) tritt seitlich die Gummitülle (17) aus, durch die das Anschlusskabel in die Kappe eintritt. An der Peripherie des krempenartigen Teils (52) besitzt die Dichtung eine U-oder V-förmige Ringnut (54), die nach außen von einer Lippe (55) begrenzt ist.

Die FIGUR 11 zeigt einen Blick in das Innere der Kappe mit eingesetzter Gummidichtung. Es ist erkennbar, dass die Stege (43) durch die Öffnungen (53) der Gummidichtung hindurchtreten und dass die äußere Lippe (55) mit dem übrigen Teil des krempenartigen Randes (52) eine Nut bildet, in die das rohrartige hintere Ende des Dosengehäuses passgenau eingesetzt wird, wenn die Kappe an der Dose verrastet wird. Diese Nut-Feder-Dichtung wird nach innen durch die Zähne (43) abgestützt, sodass sich eine besonders hohe Dichtigkeit ergibt.

Die Stege (43) haben die weitere Funktion, die Rastzungen (37), zu sichern, mit denen der Kontakteinsatz (22) im Gehäuse gehalten wird. Hierzu greifen die Stege (43) in den Zwischenraum zwischen den Rastzungen (37) und dem rohrartigen Ende (39) des Dosengehäuses (11) und hindern dadurch die Rastzungen an einem Ausbiegen aus der Rastposition. Sie geben weiter die Gewissheit, dass der Kontakteinsatz richtig im Dosengehäuse eingerastet ist, denn sie würden dann, wenn die Rastzungen nicht die Rastposition erreicht haben, beim Aufsetzen der Kappe gegen die Rastzungen stoßen, sodass die Kappe und das Dosengehäuse nicht ineinandergefügt werden können.

Die Kappe 14 und die in ihr befindliche Dichtung (50) werden vorzugsweise in einem Zwei-Komponenten-Verfahren hergestellt, bei dem sich das Elastomer der Dichtung fest mit dem Hartteil der Kappe verbindet. Dadurch wird eine absolute Wasserdichtigkeit erreicht.

### Bezugszeichenliste

- 1: Anhängerkupplung
- 2: Gelenkfuß von 1
- 3: Hals
- 4: Kupplungskopf
- 5: Öffnung in 3

- 10: Dose
- 11: Dosengehäuse
- 12, 12A - C: Anschlussflansch
- 13: Klappdeckel
- 14: Kappe
- 15: seitliche Öffnung der Kappe 14
- 16: Dichtung
- 17: Kabeltülle
- 18, 18 A - C: Rasthaken an der Kappe 4
- 181: Hinterschneidung
- 19, 19 A - C: Rasthaken an dem Dosengehäuse 11
- 191: Rastnocken
- 20: Schließfeder für den Klappdeckel 13
- 21: Achse des Klappdeckels 13
- 22: Kontakteinsatz
- 23: Führungsnut
- 24: Bohrungen für Kontakte
- 25: Aussparung
- 26: Mikroschalter
- 261: Kontakt des Mikroschalters 26
- 27: Schwenkhebel
- 28: freies Ende des Schwenkhebels 27
- 29: Oberfläche des Mikroschalters 26
- 30: Ausbuchtung
- 31: Kontakte
- 32: Kontaktaufsatz
- 33: Kontakthalter
- 34: Öffnungen im Kontakthalter 33
- 35: Stifte
- 36: Bohrungen
- 37: Rastzungen
- 38: rohrartiges Ende des Gehäuses 11
- 39: Wulst

- 41: Wand der Kappe 14
- 42: Absatz
- 43: Stege
- 44: Stirnfläche

- 50: Dichtung
- 51: hutartiges Teil
- 52: krempenartiges Teil
- 53: Schlitze
- 54: Ringnut in der Dichtung 50
- 55: Lippe

- 62: Zwischenring
- 63: Nocken am Zwischenring 62

## Patentansprüche

1. Steckdose (10) für eine mehrpolige Steckvorrichtung für die elektrische Verbindung zwischen einem Kraftfahrzeug und einem Kraftfahrzeuganhänger, mit einem Dosengehäuse (11) und einem in dem Dosengehäuse aufgenommenen Kontakteinsatz (22) für die Aufnahme der Kontakte (31), mit einer Führungsnut (55/16, 17) zur Führung von Führungsnocken eines Steckers, und mit einem Schalter (26), der durch das Einstecken eines Steckers in die Dose betätigbar ist, wobei der Schalter (26) in einer Aussparung (25) des Kontakteinsatzes (22) angeordnet ist,
**dadurch gekennzeichnet,**
**dass** der Schalter (26) am hinteren Ende der Führungsnut befestigt ist.

2. Steckdose nach Anspruch 1,
**dadurch gekennzeichnet,**
**dass** der Kontakteinsatz (22) mit Abstand zum Dosengehäuse angeordnet ist, und
**dass** die den Schalter (26) aufnehmende Aussparung (25) des Kontakteinsatzes (22) an dem Zwischenraum zwischen dem Kontakteinsatz (22) und dem Dosengehäuse (11) angrenzt.

3. Steckdose nach Anspruch 1 oder 2,
**dadurch gekennzeichnet,**
**dass** der Schalter (26) mit einer Rast- oder Klemmverbindung in der Aussparung (25) befestigt ist.

4. Steckdose nach einem der Ansprüche 1 bis 3,
**dadurch gekennzeichnet,**
**dass** der Mikroschalter (26) durch einen Stößel oder Hebel (27) betätigbar ist, der beim Einstecken eines Steckers in die Dose heruntergedrückt wird.

5. Steckdose nach Anspruch 4,
**dadurch gekennzeichnet,**
**dass** an der Außenseite der Dose zwei vorzugsweise einander gegenüberliegende Befestigungsflansche (12) angeordnet sind.

6. Steckdose nach einem der Ansprüche 1 bis 5,
**dadurch gekennzeichnet,**
**dass** die Einstecköffnung der Dose mit einem Klappdeckel (13) verschließbar ist, und
**dass** unterhalb des Deckels das Dosengehäuse (11) einen Wulst (39) aufweist.

7. Steckdose, nach einem der Ansprüche 1 bis 6,
**dadurch gekennzeichnet,**
**dass** die Dose (10) eine der Einstecköffnung gegenüberliegende Kappe (14) aufweist, die eine seitliche Öffnung (15) für einen im Winkel zur Dosenachse stehenden Kabelabgang besitzt.

8. Steckdose nach Anspruch 7,
**dadurch gekennzeichnet,**
**dass** der Kabelabgang im Wesentlichen rechtwinklig zur Dosenachse orientiert ist.

9. Steckdose nach Anspruch 6 oder 7,
**dadurch gekennzeichnet,**
**dass** das Gehäuse (11) der Dose (11) und die Kappe (14) mit zueinander komplementären Befestigungseinrichtungen (18, 19) versehen sind, die derart angeordnet sind, dass die Kappe (14) in zwei oder mehr Winkelstellungen bezüglich der Achse der Dose befestigbar ist.

10. Steckdose nach Anspruch 9,
**dadurch gekennzeichnet,**
**dass** das Dosengehäuse (11) und die Kappe (14) mit zueinander komplementären, drehsymmetrisch angeordneten Rastmitteln (18, 19) versehen sind.

11. Steckdose nach Anspruch 9 oder 10,
**dadurch gekennzeichnet**
**dass** die Rastmittel L-förmig ausgebildete Raststege umfassen.

12. Steckdose nach einem der Ansprüche 8 bis 11,
**dadurch gekennzeichnet,**
**dass** in dem seitlichen Kabelabgang (15) der Kappe (14) eine Tülle (17) aus weichelastischem Material angeordnet ist.

13. Steckdose nach Anspruch 12,
**dadurch gekennzeichnet,**
**dass** die Tülle (17) des seitlichen Kabelabgangs und die Dichtung der Nut-Feder-Abdichtung ein integrales Dichtungsteil bilden.

## Claims

1. Connector (10) for a multi-terminal connector device for the electrical connection between a motor vehicle and a motor vehicle trailer, having a case (11) and a contact insert (22) received in the case for receiving the contacts (31), having a guide notch (55, 16, 17) for guiding of guide cams of a plug, and having a switch (26), that is operable by insertion of a plug in the case, wherein the switch (26) is disposed in a recess (25) of the contact insert (22),
**characterized in that**
the switch (26) is fastened at the back end of the guide notch.

2. Connector according to claim 1,
**characterized in that**
the contact insert (22) is disposed within a distance from the connector case, and the recess (25) of the contact insert receiving the switch (26) borders on the gap between the contact insert (22) and the connector case (11).

3. Connector according to claims 1 or 2,
**characterized in that**
the switch (26) is fastened in the recess (25) using a ledge- or crimp connection.

4. Connector according to one of the claims 1, 2, 3,
**characterized in that**
the micro switch (26) is operable by a plunger or lever (27), that is pushed down on insertion of the plug into the connector case.

5. Connector according to claim 4,
**characterized in that**
two preferably opposed fastening flanges (12) are arranged on the exterior of the connector.

6. Connector according to one of claims 1 to 5,
**characterized in that**
the insertion opening of the connector is closable by a flip-top lid (13) and the connector case (11) comprises a ridge (39) below the lid.

7. Connector according to one of claims 1 to 6,
**characterized in that**
the connector case (10) comprises a cap (14) opposed to the insertion opening, having a lateral opening (15) for a cable outlet angular to the connector case access.

8. Connector according to claim 7,
**characterized in that**
the cable outlet is oriented essentially rectangular to the connector case axis.

9. Connector according to claim 6 or 7,
**characterized in that**
the case (11) of the connector (11) and the cap (14) are provided with complementary fastening devices (18, 19), that are arranged such that the cap (14) may be fixed in two or more angular positions in relation to the axis of the connector case.

10. Connector according to claim 9,
**characterized in that**
the connector case (11) and a cap (14) are provided with complementary locking means (18, 9) that are arranged in rotational symmetry to each other.

11. Connector according to claims 9 or 10,
**characterized in that**
the locking means comprise L-shaped locking ridges.

12. Connector according to one of claims 8 to 11,
**characterized in that**
the lateral cable outlet (15) of the cap (14) has a nozzle made from soft-elastic material.

13. Connector according to claim 12,
**characterized in that**
the nozzle (17) of the lateral cable outlet and the sealing of the tongue-and-groove seal form an integral sealing element.

## Revendications

1. Prise pour un connecteur multipolaire (10) pour une connexion électrique entre un véhicule à moteur et une remorque de véhicule avec un boîtier de prise (11) et un insert de contacts (22) pour recevoir les contacts (31), reçu dans le boîtier de prise, avec un rainure de guidage (55/16, 17) pour guider une came de guidage d'un connecteur et avec un interrupteur (26), actionné par introduction du connecteur dans la prise, l'interrupteur (26) étant positionné dans un évidement (25) de l'insert de contacts, **caractérisée en ce que**
l'interrupteur (26) est positionné à l'extrémité arrière de la rainure.

2. Prise selon la revendication 1,
**caractérisée en ce que**
l'insert de contacts est disposé à une certaine distance du boîtier de la prise, et l'évidement de l'insert de contacts (22) recevant l'interrupteur (26) est adjacent à l'espace entre l'insert de contacts (22) et le boîtier de la prise (11).

3. Prise selon la revendication 1 ou 2,
**caractérisé en ce que**
l'interrupteur (26) est fixé dans l'évidement avec une connexion de verrouillage ou de serrage.

4. Prise selon la revendication 1 à 3,
**caractérisé en ce que**
le microrupteur (26) est actionné par un poussoir ou un levier (27), qui est abaissé lors de l'introduction du connecteur dans la prise.

5. Prise selon la revendication 2,
**caractérisé en ce que**
deux brides de montage (12) sont disposés à l'extérieur de la prise, de préférence en opposition de l'un à l'autre.

6. Prise selon la revendication 1 à 5,
**caractérisé en ce que**
l'ouverture d'introduction de la prise est fermable avec un couvercle à charnière (13), et
le boîtier de la prise (11) comporte un bourrelet (39) au-dessous du couvercle.

7. Prise selon la revendication 1 à 6,
**caractérisé en ce que**
la prise (10) comporte un bouchon (14) vis-à-vis l'ouverture d'introduction, ayant une ouverture latérale (15) pour un départ du câble formant un angle avec l'axe de la prise.

8. Prise selon la revendication 7,
**caractérisé en ce que**
le départ du câble est essentiellement orienté à angle droit par rapport à l'axe de la prise.

9. Prise selon la revendication 6 ou 7,
**caractérisé en ce que**
le boîtier (11) de la prise (11) et le bouchon (14) sont munies avec des dispositifs de fixation complémentaires (18, 19), disposés en sorte que le bouchon (14) est fixable en deux ou plus de deux angles par rapport à l'axe de la prise.

10. Prise selon la revendication 9,
**caractérisé en ce que**
que le boîtier (11) et le bouchon (14) sont munis avec des moyens complémentaires de verrouillage, disposés en symétrie de rotation.

11. Prise selon la revendication 9 ou 10,
**caractérisé en ce que**
les moyens de verrouillage comportent une traverse de verrouillage en forme de L.

12. Prise selon la revendication 8 à 11,
**caractérisé en ce que**
une douille (17) en matériau souple-élastique est disposé dans le départ latéral du câble (15) du bouchon (14).

13. Prise selon la revendication 12,
**caractérisé en ce que**
la douille (17) du départ latéral du câble et l'étanchéité du joint à rainure et languette forment un élément d'étanchéité intégral.
